# EUROPEAN PATENT SPECIFICATION

(11) **EP 3 519 724 B1**
(45) Date of publication and mention of the grant of the patent: **04.11.2026**
(21) Application number: 17857324.2
(22) Date of filing: 27.09.2017
(51) Int. Cl.: G06T 15/04, E03F 7/12, F16L 55/26, F16L 101/12, F16L 101/30

(54) **METHODS FOR PIPE IMAGING AND INSPECTION**
VERFAHREN ZUR ROHRBILDGEBUNG UND -INSPEKTION
PROCÉDÉS D'IMAGERIE ET D'INSPECTION DE TUYAU

(30) Priority: 28.09.2016 US 201615278974; 28.09.2016 US 201615278924; 28.09.2016 US 201615279035; 28.09.2016 US 201615278879
(43) Date of publication of application: 07.08.2019
(73) Proprietor: Redzone Robotics, Inc., Pittsburgh, PA 15201 (US)
(72) Inventor: STARR, Justin, Pittsburgh, PA 15201 (US); KONAKCHIEV, Galin, Pittsburgh, PA 15201 (US); HIMES, Jordan, Pittsburgh, PA 15201 (US); PULASKI, Charles, Pittsburgh, PA 15201 (US); VAN LERSEL, Anthony, Pittsburgh, PA 15201 (US); RENTON, Timothy, Pittsburgh, PA 15201 (US); LETTMAN, John, Pittsburgh, PA 15201 (US); KUENY, Todd, Pittsburgh, PA 15201 (US); SALOTTI, Foster J., Pittsburgh, PA 15201 (US)
(74) Representative: Sandri, Sandro
(86) International application number: PCT/US2017/053703
(87) International publication number: WO 2018/064159

(56) References cited:
- CN-A- 104 192 216
- RU-A- 2014 154 363
- RU-U1- 133 896
- US-A1- 2012 197 440
- US-A1- 2012 215 348
- US-B1- 8 138 471

## Description

### PRIORITY AND INCORPORATION BY REFERENCE

This application relates to method of projecting pipe data into a virtual reality (VR) system.

### BACKGROUND

Pipes that carry water, other fluids and gases are an important type of infrastructure. Pipes are often inspected as a matter of routine upkeep or in response to a noticed issue. A great deal of pipe data is captured in still images or video, e.g., using cameras to record information from the visible spectrum of light. However, other data can provide additional information beyond what is visible to the naked eye. For example, acoustic, ultraviolet (UV) and infrared (IR) imaging have been utilized to identify details related to pipe topology or condition.

When inspecting pipes, experienced inspectors may observe a certain type of buildup, inflow of material, or defect and be able to produce a logical guess as to its composition or source, e.g., based upon the visual characteristics of that build-up. However, these guesses are not always accurate and are even more difficult to make if the substance to be identified is a liquid.
Document US 2012/0215348 A1 discloses a configurable robotic apparatus and system that is remotely operable in difficult, hazardous, subterranean, or submerged environs. The apparatus merges diverse disciplines to effect inspecting, cleaning, treating, repairing or otherwise maintaining a wide variety of materials and conditions. Deployment environments include power, municipal water and wastewater plants, surface and submerged infrastructures (pipes, lines, conduits), and like industrial applications. Extensible and articulating modules, configurable through standardized and interchangeable connectors, provide unique flexibility, scalability and versatility to accommodate a wide range of shapes, surfaces, and obstacles. In-module intelligence and instrumentation eliminates the need for constant manual control through autonomous operation capable of simultaneous optimization and synchronization of multiple work processes, but manual override and remote control is provided to overcome unanticipated limitations.

### BRIEF SUMMARY

In summary, the present disclosure provides a method of projecting pipe data into a virtual reality (VR) system comprising the steps defined at claim 1. The dependent claims outline advantageous ways of carrying out the method.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates a pipe inspection robot.
FIG. 2 illustrates a method of using terahertz (THz) data to identify target objects.
FIG. 3 illustrates a pipe inspection robot.
FIG. 4(A-B) illustrates views of a water quality probe.
FIG. 5 illustrates a method of collecting in-pipe water quality data using a mobile pipe inspection robot.
FIG. 6 illustrates a platform system for analyzing pipe data.
FIG. 7 illustrates a method of providing pipe data to a virtual
   reality setting.
FIG. 8 illustrates a pipe inspection robot.
FIG. 9 illustrates a method of using a pipe inspection robot for cleaning and/or inspecting a pipe
FIG. 10 illustrates device electronics in the form of a computer.

### DETAILED DESCRIPTION

Over time, issues may arise in various pipe segments. For example, different types of sediment deposits may accumulate in pipes, which may impede the flow of the materials. Additionally, the pipes may experience various other forms of damage such as cracks or corrosion, unauthorized inflows, etc. For these reasons, the pipes need to be routinely inspected and properly maintained.

One current inspection method involves inspectors visually identifying a deposit, for example by reviewing video captured by a pipe inspection robot or CCTV system. Through years of experience, inspectors are able to differentiate between different types of caustic substances (e.g., grease, calcium, iron oxide deposits, etc.). In this way, an experienced inspector may be able to distinguish between various types of inflows, various types of deposits or buildups, etc. However, this is more of an art than a science, with no metrics or rules except in the case of obvious substances, e.g., iron deposits tend to be red in color. An alternate solution is to take a sample of the deposit and bring it to a lab where tests can be conducted to determine the identity of the substance, e.g. with a spectrophotometer. However, this takes time and may not be ideal when a situation is time-sensitive. These technical issues present problems for users in that accurately identifying damage or deposits, if possible, may be difficult, time- consuming and expensive.

Accordingly, a presently non-claimed example provides a method for providing real-time chemical analysis of deposits found in pipelines using image based spectroscopy. Using this method, physical inspection and analysis of samples is no longer necessary. Rather, an embodiment may provide a non-contact identification technique that includes emitting a beam of terahertz (THz) radiation onto an object and receiving not only visual and topographic information, but also information related to the chemical composition of the object. Additionally, the THz radiation is slightly penetrative, so depth information may also be provided, e.g., image based information about an object in a first layer and an object in a second, deeper layer.

Other spectral imaging techniques may be utilized alone or in combination with a THz based technique. For example, THz spectral data may be coupled with other spectral data, such as IR spectral data and/or UV spectral data, in addition to THz spectral data, for chemical analysis. Appropriate transmission and receiving components may therefore be included on-board a pipe inspection robot.

The description now turns to the figures. The illustrated examples will be best understood by reference to the figures. The following description is intended only by way of example, and simply illustrates certain example embodiments.

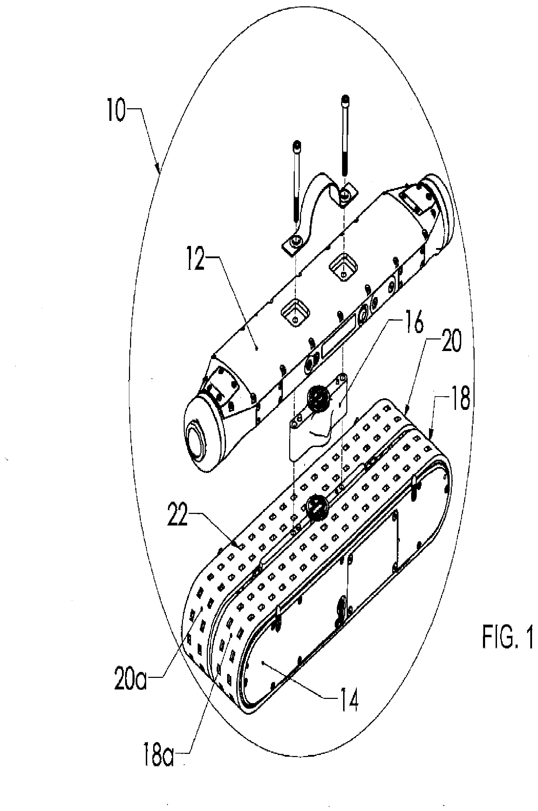

FIG. 1 illustrates a pipe inspection robot 10 that may be utilized for capturing pipe inspection data, including THz imaging data. For purposes of clarity, a partially exploded view of the pipe inspection robot 10 is shown in FIG. 1. As explained in more detail hereinafter, the device is utilized to navigate, explore, map, etc., various environments (e.g., water pipes, sewer pipes, etc.). The pipe inspection robot 10 may be implemented as an autonomous mobile robot 10 utilized for pipe inspection (e.g., a sewer pipe). However, it will be appreciated that the pipe inspection robot 10 may be embodied in any number of different types of inspection platforms, including non-autonomous devices and platforms, and may be utilized in a plurality of other environments.

The autonomous mobile robot 10 used by way of example for descriptive purposes includes a sensor component 12 and a chassis portion 14. The sensor component 12 is electrically and mechanically connected to the chassis portion 14. As shown in FIG. 1, the autonomous mobile robot 10 may also include a riser portion 16 which is positioned between the sensor component 12 and the chassis portion 14, and is electrically and mechanically connected to each. The riser portion 16 operates to increase the distance the sensor component 12 is situated above the lowest portion of the pipe, and may be utilized in large pipe applications to provide a desired vantage point for various sensing devices of the sensor component 12. Additionally, riser portion 16 and sensor component 12 are modular, i.e., they may be coupled/decoupled to and from the autonomous mobile robot 10. For example, according to other examples, the autonomous mobile robot 10 does not include the above-described riser portion 16. Functionality of the autonomous mobile robot 10 is implemented by a computing device and/or a computer program stored on a computer-readable medium, as further described herein.

According to an example, the sensor component 12 includes a plurality of sensing devices (e.g., a THz source, a camera, a radar device, a sonar device, an infrared device, a laser device, etc.) for sensing the conditions within the environment, a computing device communicably connected to the sensing devices and having a processor for processing raw information captured by the sensing devices, a memory device communicably connected to a computing device for storing the raw and/or processed information, and control circuitry communicably connected to the computing device for controlling various components of the autonomous mobile robot 10. The memory device may also be utilized to store software which is utilized by the autonomous mobile robot 10 to navigate, explore, map, etc., the environment.

The THz source of the sensor component 12 may be implemented using a variety of techniques. For example, an antenna or laser (beam pump) may act to produce a THz source that is directed to a pipe wall. In an example, sensor component 12 includes an antenna or sensor such as a charged coupled device (CCD)/camera that may receive reflections and/or transmissions of a THz source. The sensor component 12 is therefore capable of performing THz imaging data collection using an active transmission technique to paint an object such as a wall area of a pipe segment. In another example, the sensor portion 12 may include a passive THz imaging element, which views the naturally occurring radiation of an object.

As further shown in FIG. 1, the chassis portion 14 includes a first track 18, and a second track 20. In an example, the first track 18 is identical to the second track 20. The first and second tracks 18, 20 may be fabricated from any suitable material or combination of materials. The first and second tracks 18, 20 each define a plurality of openings 22 there-through. The openings 22 may be of any suitable shape and size, and may be arranged in any suitable configuration. Although only two rows of the openings 22 are shown in FIG. 1 for each track, it is understood that the openings 22 may be arranged in any number of rows. The first track 18 is positioned adjacent the second track 20. Collectively, the first and second tracks 18, 20 define a spacing there-between, and cover substantially the entire width of the chassis portion 14. For example, the width of the chassis portion is approximately 100 millimeters, and the first and second tracks 18, 20 collectively cover approximately 92 of the 100 millimeters.

The first track 18 defines a first surface 18a and a second surface (not shown in FIG. 1) opposite the first surface 18a. The first surface 18a is the surface which comes in contact with an interior surface of a pipe when the autonomous mobile robot 10 is being utilized for a pipe application. The first surface 18a of the first track 18 is substantially smooth. Similarly, the second track 20 defines a first surface 20a and a second surface (not shown in FIG. 1) opposite the first surface 20a. The first surface 20a is the surface which comes in contact with an interior surface of a pipe when the autonomous mobile robot 10 is being utilized for a pipe application. Again, the first surface 20a of the first track 20 may be substantially smooth. The respective first surfaces 18a, 20a of the first and second tracks 18, 20 have a relatively high static coefficient of friction.

The first and second tracks 18, 20 may be referred to as full coverage/wide tracks. Due to the collective width of the first and second tracks 18, 20 relative to the width of the chassis portion 14, the first and second tracks 18, 20 collectively form nearly the entire "front," "bottom" and "rear" surfaces of the chassis portion 14. Thus, when the autonomous mobile robot 10 encounters any debris or feature within the sewer pipe, the first surfaces 18a, 20a of the first and second tracks 18, 20 come in contact with the debris or feature. In contrast to wheeled robots and narrow track robots, the full coverage/wide tracks 18, 20 are configured to enable the autonomous mobile robot 10 to climb over the debris or feature and continue performing the inspection, navigation, mapping, etc. Additionally, nearly all of the weight of the autonomous mobile robot 10 passes through the moving full coverage/wide tracks 18, 20 to the encountered debris or feature. Therefore, the autonomous mobile robot 10 is configured to always continue driving as the full coverage tracks 18, 20 cannot rotate without contacting something to react with and continuedriving.

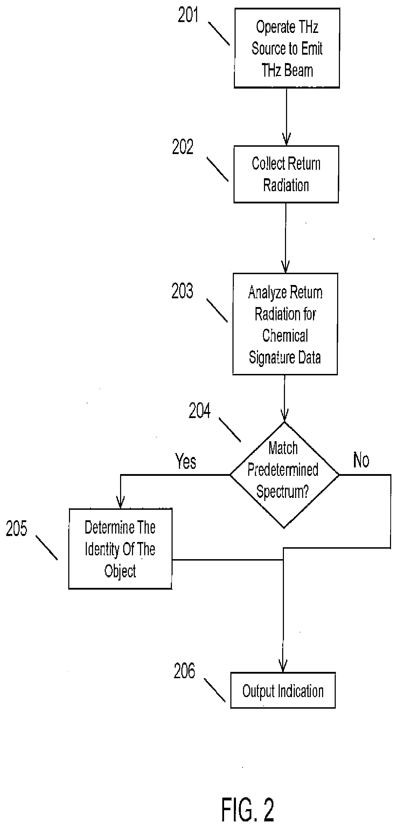

Referring now to FIG. 2, at 201 according to a non-claimed method a THz source is operated to emit a THz beam to paint a target, e.g., wall of a pipe segment. This permits the collection of return radiation (THz beam) at 202. The return beam collected at 202 may comprise absorption and/or emission data related to chemical bonds of a target object, which may be resolved for example utilizing spectroscopy processing techniques.

The return data may comprise one or more characteristic absorption peaks, as sensed for example by sensor component 12 of FIG. 1, which permits analysis of the chemical composition of the pipe wall segment, as illustrated at 203. For example, THz spectroscopy utilizes wavelengths of radiation in the terahertz band, which ranges from about 1 mm to about 0.1 mm, to distinguish between various chemicals contained in an object according to their spectral characteristics. For example, a THz sensor may be used to emit a THz beam (that may be focused on a target object using a mirror or other optical structure) and sense return radiation that is influence by chemical(s) in a target object. The return radiation may therefore include information related to absorption spectra. In turn, various materials may be distinguished on the basis of their chemical compositions, e.g., in terms of classifying the materials based on dominant features contained within the spectral data related to certain chemical bonds of known materials. For example classification of the absorption spectra of a target object may be achieved by using a minimum distance classifier and neural network methods. By way of specific example, spectral data for a known material may be utilized as a reference for identifying a target object by comparison of one or more peaks in the target object's THz return data. THz images of a target object are formed by integrating the peak data around one or more known frequencies in the THz band, e.g., 0.82THz.

A variety of THz laser sensing chips may be utilized for sensing or receiving the return radiation, e.g., provided within sensor component 12.
Different chips have different strengths and weaknesses in terms of the environments they work in. Chips that are sensitive to different chemicals (e.g., bond vibrations) can be interchanged with chips in existing THz sensors to suit desired applications. For example, some chips may not work well when detecting reflections off of fabrics because there is a greater signal to noise ratio. However, those same chips may work very well with objects that are dark colored, e.g., an asbestos lined pipe that is pitch black may require a very different sensor than a sensor used in a typical pipe. In an embodiment, the THz beam generator and THz sensor may be utilized in air-filled pipes as well as pipes that are submerged with water.

THz imagery provides distinct advantages over other types of visual imagery, particularly in a pipe inspection implementation. For example, when a wave of visible light is directed onto an object, the light is reflected or refracted back and information relating to color, shape, and topography is received. When a beam of THz radiation is emitted, not only is return information about shape and topography received, but because each type of chemical bond has a unique vibrational frequency, THz spectroscopy leverages these differences in order to determine the chemical composition of an object based on the identification of its chemical bonds.

For example, as outlined at 203 and 204 of FIG. 2, return radiation is analyzed to produce peak data, e.g., in the form of an absorption/emission spectra, for a particular target, as shown at 203. The absorption/emission spectra is used to identify one or more predetermined spectra, e.g., known spectra of cement, metal or metal alloys, rust, soil or organic material of varying types, etc., as shown at 204.

If a match is determined at 205, e.g., return radiation produces a spectrum having one or more peaks matching (classified to a predetermined confidence level) to iron oxide, an indication is outputted that a match for a particular chemical composition has been identified at 206. Otherwise, an indication may be outputted that no match has been found. Visual image data or additional imaging data may be collected by at least one camera or other sensing device mounted to autonomous mobile robot 10, e.g., including in sensor component 12. Additional visual data (images, video) may be captured, such that a THz analysis is improved (e.g., in terms of confidence) or omitted, e.g., if THz data is unresolvable, in favor of other or additional sensed data.

In addition to providing chemical information, THz radiation is also slightly penetrative. Some frequencies of THz radiation can penetrate several millimeters below the surface of a targeted object. This aspect of the radiation not only provides chemical information about the targeted object, but it also provides chemical information about what the targeted object may be laying on top of or layered over. For example, if part of a pipe appears to be corroded with rust, lime or other deposit, THz imaging may reveal that the corroded segment is composed of the components of cement, e.g., lime, carbonate, iron oxide, etc. If the THz imaging produces readings of chemical signatures that are suggestive of soil, because the original beam was directed at the pipe wall, this provides a strong indication that the pipe wall has become very thin and is in danger of failing or has in fact failed.

A THz beam generator and a THz sensor (e.g., CCD/camera, crystal, etc.) may be mounted to autonomous mobile robot 10. A THz beam generator and a THz sensor may be mounted to any type of robot that is able to capably traverse through a pipeline. The THz beam generator and sensor may be mounted at different locations on the mobile inspection robot. For example, in order to attain 360-degree scanning ability, THz-related units may be positioned in an array, e.g., at the 3, 6, 9, and 12 o'clock locations of the sensor component 12. Power supplied to the THz units may be supplied by the autonomous mobile robot 10, may be supplied by a separate, dedicated battery, or may be supplied by a commercial power source (e.g., a wireline provided from the surface to the robot). THz imaging may be conducted at-will, e.g., by a user-generated command, or may be set to scan continuously or intermittently, e.g., according to a program or a policy.

The processing at 203 and/or 204 may take place locally on the autonomous mobile robot 10 or may take place off-site on another information handling device (PC computer, laptop, tablet, etc.). The processing may be completed in real-time or near real-time. For example, if THz imaging is being continuously run, the processing of each subsequent scan may lag behind by a few seconds because the previous scans need to be completed first.

An analysis of the collected THz data at 203 may be combined with other techniques. For example, a THz scan of an object may be conducted that collects chemical composition data for a pattern-matching algorithm that analyses spectral peak data to determine what the object actually is, e.g., based on comparison matching, as indicated at 204. In addition, a visual camera (or other imaging device) may be used to collect visual image data of the same target. Thus, in addition to comparing THz data to a database of known materials, this may be coupled to a visual light analysis of the target object in order to refine or rank various possibilities of object identifications. For example, a suggested list of the top three most likely candidates of what the targeted object might be may be included in the output indication at 206.

Accordingly, images produced by THz imaging data (or data derived therefrom) may be overlaid or combined with traditional visual images or other data (e.g., pipe map data) using standard image alignment techniques. The benefits of this overlay are that a user not only obtains a visual of the internals of a pipe, but they also receive a metric as to what they are visualizing chemically.

The THz imaging data may be related to various parts of a pipe network using pipe mapping data. For example, if a detailed mapping is available for a pipe network, the THz imaging data may be associated with the various parts of the pipe network. This permits a user to review visual inspection data for a particular part of the pipe network as well as related THz imaging data for the particular part of the pipe network.

### IN-PIPE WATER QUALITY TESTING

A mobile pipe inspection robot is described, that has integrated therewith one or more probes for water quality analysis to provide real-time information about the characteristics of a stream of effluent. The probe(s) comprise one or more sensors that sense water quality characteristics, e.g., dissolved oxygen, pH, heavy metals, ORP, etc. The data from the probe(s) may be reported by the mobile pipe inspection robot in a variety of ways.

For example, the probe data is used to overlay information about water quality on a video feed provided by the mobile pipe inspection robot, e.g., a video of the pipe interior. As another example, the probe data is used in a targeted fashion to determine the temperature and makeup of an incoming illegal or unauthorized discharge or inflow into a sewer pipe. Results that are of interest, e.g., fluid pH, are immediately displayed via a live feed and a complete report showing quality varying with inspection time is produced to help clients pinpoint illegal or unauthorized discharges or inflows.

Collecting of these readings continuously throughout the survey is permitted. Thus, there may not be just one pH measurement, but a plot of time vs. pH for the duration of the inspection.

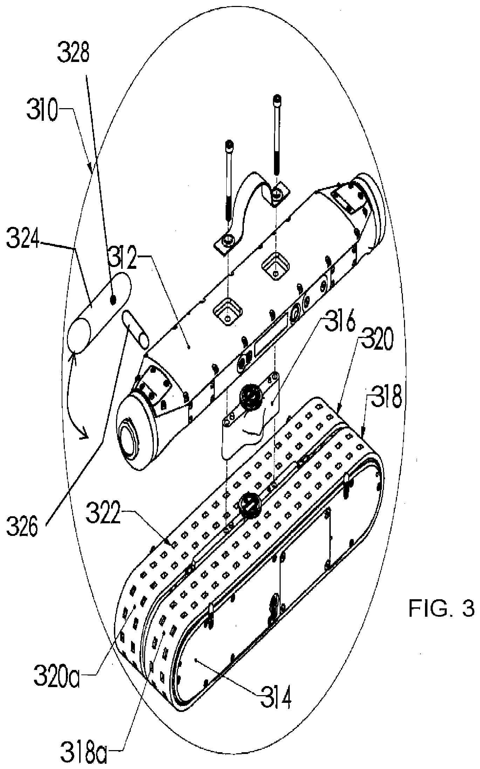

As further illustrated in FIG. 3, the autonomous mobile robot 310 comprises one or more water quality probes 324. The water quality probe 324 illustrated in FIG. 3 is mounted to sensor component 312 by way of an extension piece 326. The extension piece 326 attaches to an attachment port 328 on the water quality probe 324. The extension piece 326 permits power and data connection for communications between the water quality probe 324 and the sensor component 312, and in turn possibly to the chassis portion 314, as further described herein.

The water quality probe 324 may be maintained in a fixed position with respect to the sensor component 312; however, the water quality probe 324 may be repositioned by pivoting about the connection offered by the interface of port 328 and extension piece 326, as illustrated by the double headed arrow in FIG. 3. This permits an end of the water quality probe 324 to be repositioned closer to the ground or water surface, e.g., as the autonomous mobile robot 310 moves through a pipe.

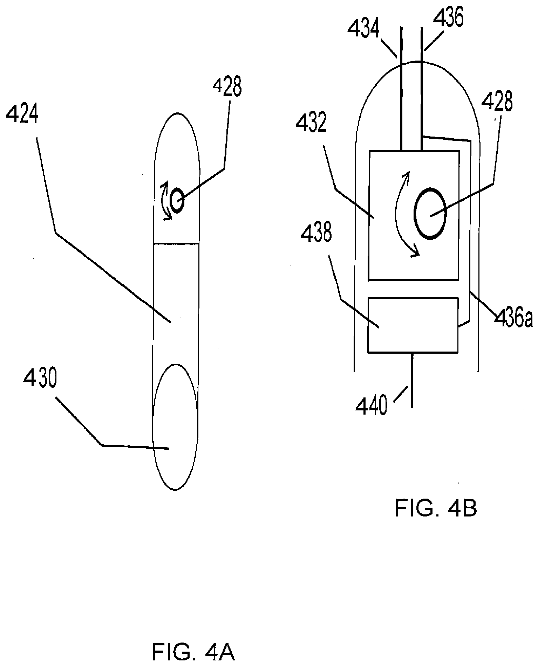

Referring to FIG. 3 and FIG. 4(A-B), the water quality probe 424 may be repositioned by inclusion of an electric motor 432 housed within the water quality probe 424 and configured to rotate the water quality probe about the connection offered by the interface of port 428 and extension piece 426.

Power for the electric motor 432 of water quality probe 424 may be provided by a battery housed within the sensor component 312 and connected by wire to water quality probe 424 by extension piece 326. Similarly, control data may be communicated to electric motor 432 of water quality probe 324 by a wired connection between sensor component 312 and water quality probe 324, although the control data may be communicated using wireless communication as well. In an embodiment, the water quality probe 324 may be repositioned by an operator that communicates control instructions, whether through wired connection to sensor component 312 or via wireless communication to sensor component 312, such that an operator may remotely control the positioning and activation of water quality probe 324. Alternatively, water quality probe 324 may be provided in a fixed position, pointed downward, such that the sensor end 430 of the water quality probe 424 comes into contact with water or fluid, e.g., proximate to the autonomous mobile robot's 310 tracks.

Illustrated in FIG. 4A is a water quality probe 424 that may be reversibly attached to an autonomous mobile robot 310, e.g., via attachment to sensor component 312. The water quality probe 424 includes port 428 for power and data connection, as well as mechanical coupling to another component (e.g., sensor component 312 of FIG. 3). The water quality probe 424 includes a sensing part or end 430, which may comprise one or more water quality sensors.

By way of example, sensing part 430 may be formed of pH sensitive glass or other ion sensitive material and filled with a buffer solution that baths an internal electrode. Other pH probe components may be included in water quality probe 424, such as a reference electrode and circuitry or meter electronics 438 coupling a pH electrode and a reference electrode, as will be understood by those having ordinary skill in the art.

Additional or alternative components may be included in the water quality probe 424, e.g., depending on the types of measurements that are to be obtained. For example, if ORP measurements are to be obtained, patch or foil metallic electrodes may be provided on the surface of probe at end 430 for conducting ORP measurements. Likewise, other sensor components may be included in water quality probe 424 such that the water quality probe 424 is a combination sensor. In an embodiment, more than one water quality probe 424 may be attached to the sensor component 312, e.g., a second water quality probe 424 may be attached to the opposite side of the sensor component 312. If more than one water quality probe 424 is provided, these may be operated in a cooperative manner or independently.

Referring now to FIG. 4B, a cross section of an end of the water quality probe 424 is illustrated. As shown, an electric motor 432 is provided proximate to the port 428 of water quality probe 424. This permits the electric motor 432 to be powered and controlled by power 434 and data 436 lines, here illustrated exiting the rear of the water quality probe 424, although these may be routed through port 428 and extension piece 326, as described herein. The electric motor 432 causes the water quality probe 424 to reposition, as described herein.

Further, water quality probe includes circuitry 438 and connection 440 for operating the sensor part 430 of water quality probe 424 to obtain water quality measurements. For example, in the case of a pH measuring water quality probe 424, the circuitry 438 may include meter electronics and memory having a program of instructions for obtaining voltage measurements from a measuring electrode and a reference electrode connected to circuitry 438 by connection 440. The circuitry 438 may directly report the measurements using data lines 436a, 436 or may process the measurements and report pH readings via data lines 436a, 436. The operation of circuitry 438 may be controlled, e.g., by communication by or through sensor component 312, for example communicated via data line 436, 436a.

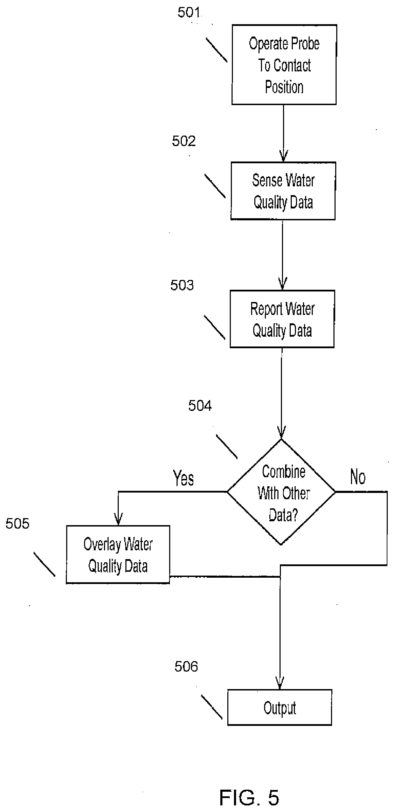

Real time water quality measurements may then be produced using an autonomous mobile robot 310 including a water quality probe 424 in addition to other sensors included in a sensor component 312. An example of a method for obtaining and reporting water quality measurements is provided in FIG. 5.

As illustrated in FIG. 5, an autonomous mission is loaded into sensor component 312 ahead of time, or, an operator may provide mission details or other controls in real time to sensor component 312 or to other on-board component which contains a memory and a processor, e.g., chassis portion 314. If indicated by the mission or if instructed by an operator in real time, mobile inspection robot operates the water quality probe at 501 to a contact position such that a sensor end, e.g., end 430, of the water quality probe contacts the fluid to be tested. Again, the water quality probe may be manually positioned into a contact position or mounted at a fixed position that promotes contact with fluid within the pipe as the autonomous mobile inspection robot traverses the pipe's interior.

At 502, the water quality probe is in contact with the fluid in question and may sense water quality data, e.g., detect relative voltage or potential of the fluid as compared to a reference solution included in the water quality probe for the purpose of pH sensing. The timing of the measurement or sensing of the water quality data may be likewise controlled, e.g., as part of a pre-programmed mission, in response to an operator control, a combination of the foregoing, etc.

The water quality data may then be reported by the water quality probe, the sensor component, or a combination thereof, as indicated at 503. As has been described herein, the water quality data may be reported at 503 in response to a trigger, such as a request for sensing or a request for reporting of water quality data, or as part of a program, e.g., according to a predetermined schedule or as a stream of data. The reporting of the water quality data at 503 may be considered as a local reporting, e.g., the water quality data being sent from the water quality probe to a local component, such as sensor component 312, or may be considered as a reporting to a remote device, e.g., an operator's laptop computer.

If the water quality data is to be combined with other sensed data, as determined at 504, the water quality data may be combined, e.g., overlaid with the other sensed data, as indicated at 505. For example, the water quality data is combined with a video or laser scan of the pipe's interior. This video or laser scan data comprises data forming a visual display image, where the video data or laser scan data of the pipe's interior is combined with the water quality data, e.g., as an overlay of text and/or graphics on the visual display image. This makes it possible for an operator to view in real time water quality data associated with what the operator is viewing. The combined data may be stored and viewed at a later time.

The combining of the data at 505 may be done prior to reporting or after reporting of the water quality data. For example, the water quality data may be overlaid locally by a component of the autonomous mobile robot, such as sensor component 312, and thereafter communicated to a remote device, e.g., an operator's laptop computing device. Alternatively, the water quality data may be reported ahead of time, e.g., with a time stamp, and later associated with corresponding video or laser scan data to form a composite image.

If no combination of water quality data is to be made with other sensed data, then the water quality data may simply be reported outbound from the autonomous mobile robot, as indicated at 506. If the water quality data is combined with the other sensed data locally, it may be output as combined data, also indicated at 506.

### VIRTUAL REALITY DISPLAY OF PIPE INSPECTION DATA

As noted hereinabove, even if a pipe inspection robot is utilized, the resultant data produced by conventional systems is often difficult for the end user to grasp. The pipe inspection data may be processed to relate 2D and 3D information of the pipe's interior; however, this data is often difficult to interpret visually in 2D display formats. Moreover, for a given pipe segment, although its inspection data (e.g., images, video, graphics, etc.) may be relevant and understood by the end user, its place or overall context within the larger pipe network may be difficult to grasp, as some pipe networks are quite extensive.

These technical issues present problems for end users that need to make decisions regarding the pipe network, e.g., city manages that must decide whether to expend resources rehabilitating or replacing particular segments of pipe within a pipe network. Since simply visualizing static 2D images or graphics, or even viewing video data of the interior of the pipe, may be difficult, an end user still may not have a clear understanding of the relevant issues presented by the pipe inspection data. More particularly, the best way to appreciate the condition of a pipe segment, and its relevance to an overall network, may be to physically inspect the pipe segment or even the entire network. As will be readily apparent, this is often simply not a viable option.

Accordingly, the present invention provides a method for more effectively visualizing the interior of a pipeline by using a virtual reality (VR) system. Users may attain a better perspective for the condition of a particular pipe segment, and where it is located within a pipe network, by utilizing a VR system.

In an embodiment, pipe inspection data (e.g., visual images and/or video, laser scan data, sonar inspection data, etc.) are obtained from a mobile inspection robot that traverses the interior of a pipe segment.

The pipe inspection data will undergo processing prior to its presentation in a VR system. For example, visual images, video data, and laser or sonar scan data obtained from a circular (or other shape) pipe interior may be de-warped for projection on a flat, 2D surface. This provides for a 2D display of the data, e.g., onto a flat screen or a projection display.

The invention will additionally process the pipe inspection data such that it may be projected into a VR system, e.g., a head mounted display. Therefore, an embodiment permits users to attain a 360 degree view of the projected images, e.g., by wearing a pair of VR goggles. Through this 360 degree view, individuals may gain a better perspective of the condition of the interior of pipe segments, i.e., as if they had physically entered the interior of the pipe itself.

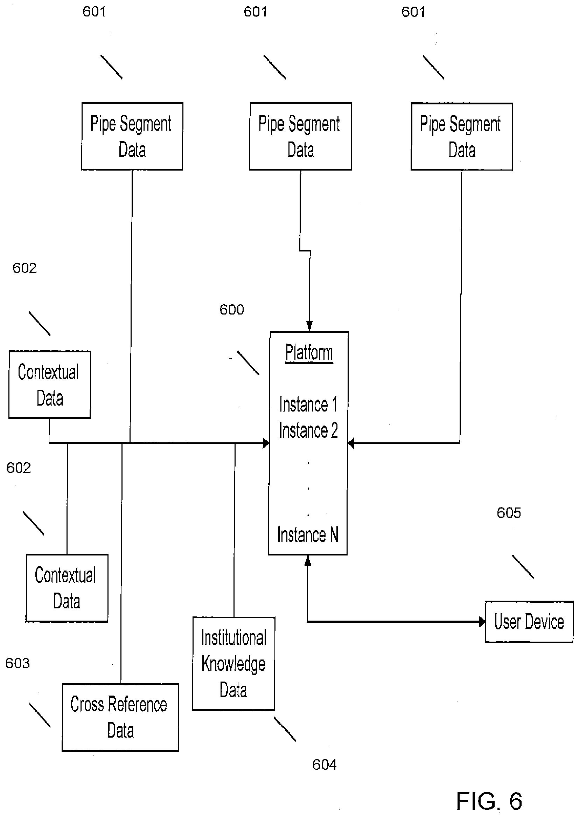

Referring to FIG. 6, the invention provides a platform 600 that receives pipe data from a variety of sources. For example, the platform 600 receives pipe segment data 601, e.g., pipe inspection data collected with a pipe inspection robot(s) at a given time and synchronized with a particular location within a pipe segment (either at the time of collection in a post processing procedure). The platform 600 may also receive contextual data 602 from a variety of sources, such as remotely connected devices storing relevant infrastructure information. For example, contextual data 602 may include pipe segment location data, service call history data for a pipe segment or type, geographic data indicating proximity of pipe segments to water bodies, data regarding the inclination of a pipe segment, data regarding previous maintenance of pipe segments and contractors, techniques and costs associated therewith, etc. The platform 600 may also receive cross reference data 603, for example reference or comparable infrastructure information from other cities, municipalities, etc., as well as best practices data, contractor related data, cost data, and the like. The platform 600 may also receive institutional knowledge data 604, for example text or video notes of an employee familiar with a particular infrastructure asset or feature type.

This permits platform 600 to provide instances of the pipe segment data 601, the contextual data 602, the cross reference data 603, and the institutional knowledge data 604, or combinations of the foregoing, to a user device 605, e.g., laptop computing device, tablet computing device, head mounted display system, etc. By way of example, the platform 600 may take pipe segment data 601 in the form of 2D visual images from the circular interior of a pipe segment, create de-warped images from the 2D visual images such that they may be projected on a flat 2D plane (e.g., a flat panel display screen), and communicate these de-warped images to a user device 605. Likewise, the platform 600 may combine the visual image data with other data, e.g., contextual data 602, etc., to form a composite image or image having an overlay of text and/or graphics. Furthermore, processing may be applied by the platform 600 to prepare pipe segment data 601 and/or other data for projection within a VR system, as further described herein.

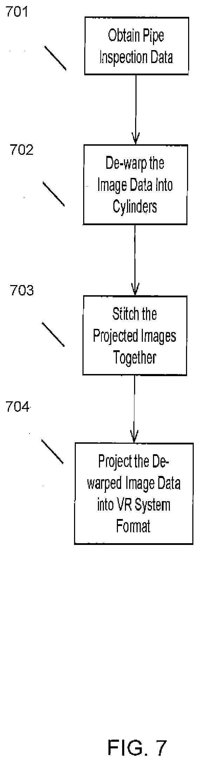

Referring now to FIG. 7, at 701, the invention obtains pipe inspection data, e.g., visual image data, laser scan data, etc., of a particular segment of a pipe. The pipe inspection data are collected by at least one sensor or an array of sensors mounted to a mobile inspection robot. For example, a camera or camera array of the mobile inspection robot may be equipped with a single camera (e.g., having a fisheye lens) or an array of cameras for obtaining image data of substantially the entire pipe interior for a particular pipe segment, e.g., in 360 degrees. Fisheye lenses allow for the production of extremely wide-angled images. For example, the angle of view of a fisheye lens may be between 100 and 180 degrees. A fisheye image enables large surface coverage with a minimal amount of image captures. This aspect of the fisheye lens makes it possible to create complete panoramic views for virtual reproduction. In an embodiment, the fisheye lens may be, but is not limited to, a circular fisheye lens or a full-frame fisheye lens.

At 702 an embodiment may de-warpthe collected images in order to format them appropriately for a particular type of display. By way of example, a warped image captured by a fisheye lens may be de-warped for display on a flat panel screen. De-warping is a process of correcting a fisheye image's perspective view by flattening the image out into a traditional 2D format but with the benefit of attaining all the detail that a wide-angled view provides).

As another example, a warped image from a fisheye lens may be de- warped and thereafter projected onto a particular shape, e.g., a cylinder representing the physical shape of the pipe interior. In an embodiment, the de-warping and other image processing may take place on a separate computer that utilizes de-warping or distortion processing software, e.g., on platform 600 or a user device 605. In an embodiment, the image processing may take place locally on the mobile inspection robot.

At 704 an embodiment may stitch the processed (e.g., de-warped, projected) images together in order to form a complete 360 degree view of a particular pipe segment and/or to from a continuous view of adjacent pipe segments. Thus, image processing is applied to form a composite or combination image, whereby the individual images of a single pipe segment are formed into a 360 degree view of the particular segment. Additionally, an embodiment may form composite or combined images representing adjacent 360 pipe segment views, e.g., for use in a VR system display, as further described herein.

In an embodiment, the stitched images are appropriately modified for projection or presentation on a given virtual reality system display. For example, a given VR system may utilize a particular VR display type for which images are to be customized. This involves processing the images such that they are amenable to display in the VR system's display.

In an embodiment, a computer program stitches or combines the images together to produce a continuous virtual environment map of the pipe network of portion thereof. A virtual environment map can be used to render 3D objects and virtual panoramic scenes, with the latter being used as a representative example herein.

It should be noted that additional pipe inspection data or other data (e.g., laser scanning data, textual data, telemetry data, etc.) may be paired or combined with the projected virtual panoramic scenes formed from visual images in order to provide the user with more information regarding a pipe segment that is being viewed in a VR system. By way of example, telemetry data may consist of laser pipe condition assessment data and sonar pipe condition assessment data. The telemetry data may be projected into the virtual reality system, e.g., overlaid on the virtual panoramic scenes as a text or graphic.

In another embodiment, image data other than visual image data may be used as the raw image input data that is processed (e.g., projected onto a given shape) and utilized for VR display. By way of example, a laser scan may be performed by a mobile inspection robot, whereby laser reflection data is sensed and used to determine distance information regarding a distance between the laser origin and sensor. This data in turn may be used to compose an image of the pipe's interior. As such, this data may also be used for forming a VR system display image, e.g., virtual panoramic image derived from the laser scan data. As will be apparent to those having skill in the art, various other data sources may be used to form VR images.

At 704 an embodiment may project the de-warped images into a VR system. Examples of VR systems include the OCULUS RIFT, SAMSUNG GEAR or HTC VIVE VR systems. The VR system may contain a head mounted display including one or more screens, such as projections screens that present a VR image to the user. This provides the user with a better visual perspective of the surroundings. Additionally, VR systems permit the user to move about within the image virtually, e.g., to pan or zoom to a particular part of the image. Moreover, an animation or predetermined image presentation routine may be presented. By way of example, a user may be presented with VR images for a first pipe segment and thereafter be automatically shown a next pipe segment, e.g., as if the user was walking along the length of the pipe. This process may proceed automatically or according to user input, e.g., to move about within the pipe virtually. OCULUS RIFT is a registered trademark of Oculus VR, LLC in the United States and other countries. SAMSUNG GEAR is a registered trademark of Samsung Electronics Co., LTD in the United States and other countries. HTC VIVE is a registered trademark of HTC Corporation in the United States and other countries.

If a feature of interest to the user appears within the VR display, e.g., a sediment deposit is found shown the pipe wall, a user may focus or direct the VR view in this area. Additional data may also be presented, e.g., in response to a user input (such as voice input, gesture input, manual input, etc.). By way of specific example, a user may provide input to display additional data (e.g., telemetry text or graphics) on seeing a feature of interest within the VR display (e.g., sediment deposit, corrosion, crack, etc.). Likewise, a user viewing a VR display formed of visual images may choose to switch data sources, e.g., to laser scan data, responsive to seeing a feature of interest. Thus, a user may be provided with additional data, e.g., material construction of the pipe, the pipe segment's age, maintenance history, or the like.

In an embodiment, the image processing (i.e. the steps of de-warping, projecting, and stitching, etc.) may occur in post-processing or real time. Real time image processing may leverage localized de-warping at the camera-level to allow individuals to visualize a live virtual environment while operating an inspection robot.

### MOBILE JETTER AND PIPE INSPECTION ROBOT

Water jetters (of various types) are often used to clean small and medium diameter pipelines. Water jetters work by spraying a jet of compressed water at debris or deposits in order to dislodge them and enable them to be removed via natural scouring or a vacuum truck. Typically these water jetters use external sources of water or water tanks, with a pump mounted on the top side.

An integrated, submersible pump, filter and one or more (e.g., an array of) jetter nozzle(s) on a mobile platform, e.g., a pipe inspection robot, are provided in order to clear debris using the mobile platform, e.g., while or in connection with performing a pipe inspection mission. Pressurized water to is used increase mobility of the robot or to clean pipelines without wasting freshwater or increasing the flow to treatment plants.

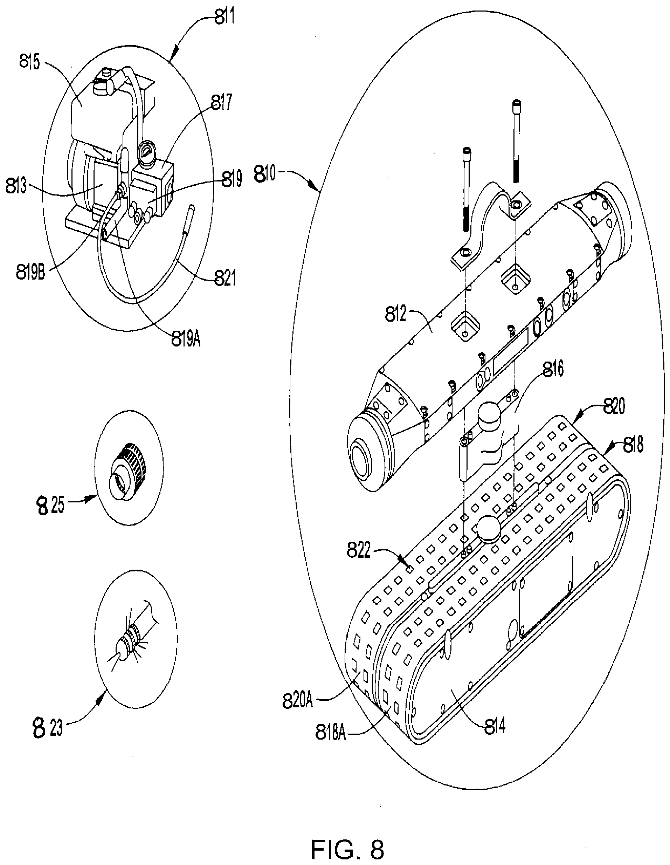

FIG. 8 (in which common elements to FIG. 1 have been advanced by 800) illustrates an example pipe inspection robot 810 that may be utilized for capturing pipe inspection data and for jetting the pipe. For purposes of clarity, a partially exploded view of the pipe inspection robot 810 is shown in FIG. 8. As explained in more detail hereinafter, the device may be utilized to navigate, explore, map, clean, etc., various environments (e.g., water pipes, sewer pipes, etc.). The pipe inspection robot 810 may be implemented as an autonomous mobile robot 810 utilized for pipe (e.g., a sewer pipe) inspection and/or jetting operations. However, it will be appreciated that the pipe inspection robot 810 may be embodied in any number of different types of inspection platforms, including non-autonomous devices and platforms, and may be utilized in a plurality of other environments.

The autonomous mobile robot 810 used by way of example for descriptive purposes includes a sensor component 812 and a chassis portion 814. The sensor component 812 is electrically and mechanically connected to the chassis portion 814. As shown in FIG. 8, the autonomous mobile robot 10 may also include a riser portion 816 which is positioned between the sensor component 812 and the chassis portion 814, and is electrically and mechanically connected to each. The riser portion 16 operates to increase the distance the sensor component 812 is situated above the lowest portion of the pipe, and may be utilized in large pipe applications to provide a desired vantage point for various sensing devices of the sensor component 812. Additionally, riser portion 816 and sensor component 812 are modular, i.e., they may be coupled/decoupled to and from the autonomous mobile robot 810. For example, according to other embodiments, the autonomous mobile robot 810 does not include the above-described riser portion 816 but rather includes a jetter 811. In another example, both sensor portion 812 and jetter 811 are included, with or without the riser 816. The order (stacking) of modules such as the sensor portion 812, the jetter 811, and/or riser 816 may be selected according to a number of factors, e.g., the type of jetter 811 (e.g., nozzle configuration), the type of sensor portion (e.g., 360 imaging, partial view, forward looking, etc.) and the environment to be inspected and/or cleaned.

Functionality of the autonomous mobile robot 10 may be implemented by a computing device and/or a computer program stored on a computer-readable medium, as further described herein.

According to an example, the sensor component 812 includes a plurality of sensing devices (e.g., a camera, a radar device, a sonar device, an infrared device, a laser device, etc.) for sensing (e.g., imaging) the conditions within the environment, a computing device communicably connected to the sensing devices and having a processor for processing raw information captured by the sensing devices, a memory device communicably connected to a computing device for storing the raw and/or processed information, and control circuitry communicably connected to the computing device for controlling various components of the autonomous mobile robot 810. The memory device may also be utilized to store software which is utilized by the autonomous mobile robot 10 to navigate, explore, map, jet, etc., the environment.

In addition to in lieu of sensor component 812, a jetter 811 may be included. The jetter 811 includes components to provide a pressurized stream of water through a nozzle or nozzles 823. For example, the jetter 811 may include an engine 813 that supplies the mechanical force to pressurize a pump 817. The engine 813 may be of various types, for example a gasoline or other internal combustion engine that runs on fuel, as for example provided by fuel tank 815.

The pump 817 may provide pressurized water from a local source, e.g., water taken up from the pipe interior at a lower margin of the autonomous mobile robot 810. By way of example, an inlet hose 821 may extend behind the autonomous mobile robot 810 to a lower margin of the autonomous mobile robot 810 and suction water up from the pipe's bottom into a manifold 819 of the pump. The end of the hose 821 may be provided with a filter 825, e.g., a cage type filter, or other mechanism to prevent debris from the pipe water from entering the intake 819b of the manifold 819.

The engine 813 pressurizes the water obtained via the intake 819b and provides it through the outflow 819a to a connected nozzle 823. The nozzle 823 may be directly connected to outflow 819a or may be coupled to the outflow 819a by a hose or tubing (not shown). Various nozzle types may be provided, e.g., a penetrating nozzle may be provided for initial penetration of the pipe or a closed nozzle may be used for cleaning. More than one type of nozzle 23 may be coupled to outflow 819a, e.g., one penetrating and one closed nozzle.

Furthermore, in an embodiment various components may be interchanged in order to accomplish different tasks. For example, if cleaning is the only mission or is a priority mission, the jetter 811 may be included in place of the sensor component 812. Likewise, the chassis portion 814 may be varied depending on the mission type. For example, rather than a chassis portion 814 having tracks 818, 820, an embodiment may be fitted with a platform chassis, e.g., a floating platform.

An example may utilize the nozzle(s) 823 for various purposes. For example, a penetrating nozzle may be chosen for cleaning in a forward (penetrating direction). This may be useful for example in an application where debris is to be cleared ahead of the autonomous mobile robot 810. In another example, the nozzle 823 may be a closed type nozzle in order to facilitate cleaning in a reverse direction, e.g., after an inspection mission in the forward direction has taken place. As will be readily apparent to those having skill in the art, the type and placement of nozzle(s) 823 may permit the pressurized water to provide a moving force for the autonomous mobile robot 810, e.g., in an implementation where the chassis portion 814 having tracks 818, 820 is replaced by another type of chassis (e.g., sled, floating platform, etc.).

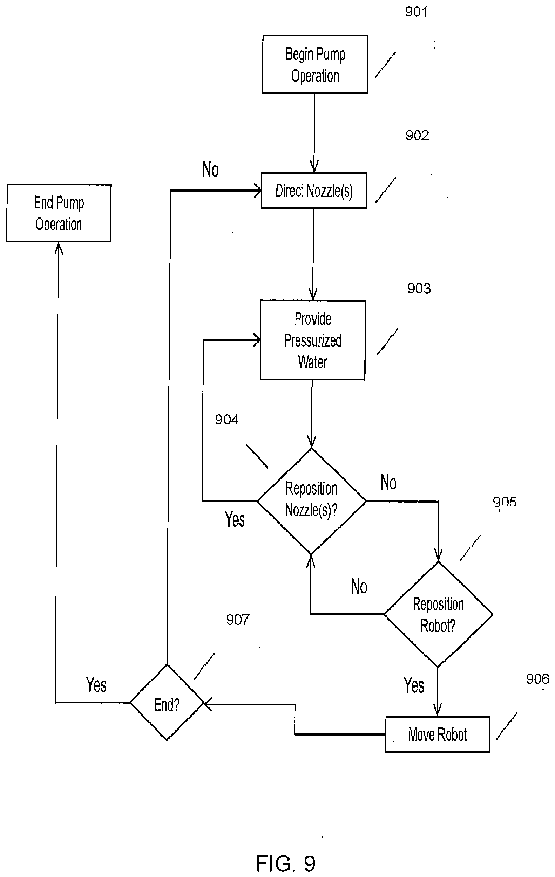

Referring now to FIG. 9, at 901 a pump is operated to pressurize water obtained locally, as described herein. If the autonomous mobile robot 810 includes nozzles that may be repositioned, e.g., at a target area of a wall of a pipe segment, the nozzle(s) is (are) directed at the target at 902. This permits the provision of pressurized water at 903 to be directed at a specific area within the pipe.

At 904 a determination may be made as to whether the nozzle(s) need to be redirected, e.g., at a new area of the pipe wall. This determination may be made autonomously, e.g., using image analysis of the pipe interior from images obtained for example by the sensor component. The redirection may also be provided autonomously according to a predetermined set of instructions or a program, e.g., a nozzle may be redirected according to a programmed routine as the autonomous mobile robot 810 makes its way through a pipe segment. Alternatively or in addition, an operator may instruct the autonomous mobile robot 810 to redirect the nozzle(s), e.g., using imaging provided in near real time by the sensor component 812.

If the nozzle(s) are not to be redirected, as determined at 904, the autonomous mobile robot 810 may continue to traverse down the pipe segment to jet a new area. At 905, for example, it may determined that the autonomous mobile robot 810 is to be repositioned, e.g., according to a preplanned cleaning and inspection mission routine, in response to an operator's instructions, etc. Thus, the autonomous mobile robot 810 may move at 906 to encounter a new section of the pipe. The steps, in various order, may be repeated, and one example is shown in FIG. 9. If the cleaning and inspection mission has ended as determined at 907, e.g., the autonomous mobile robot 810 has reached the end of particular pipe segment, the pump may be shut down, as indicated.

The cleaning process may take place in combination with an inspection process. For example, a cleaning process may be carried out first, followed by an inspection process, whereby the autonomous mobile robot 10 traverses the pipe segment again, after the cleaning process, to capture visual or other imaging data. The reverse order is also possible. The cleaning process may be combined with the inspection process in other ways as well. By way of example, a cleaning process may be undertaken for a first part of a pipe segment, followed by an inspection process, and so on, until an entire segment length of the pipe has been inspected. Alternatively, inspection may be carried out simultaneously or substantially simultaneously with a cleaning process.

Furthermore, as has been noted herein, the inspection process may be combined with the cleaning process such that the cleaning process is directed by the result of an inspection process. For example, pump operation may begin at 901 responsive to detecting a particular debris location within the pipe during an inspection process. This conserves water and power such that only necessary cleaning is undertaken.

For example, sonar or other imaging sensor may be coupled with the jetting, enabling an operator to track the progress of a cleaning operation as it takes place. For example, a pipe inspection robot that includes a sonar unit may conduct sonar sweeps that show how much debris is being removed. This imaging technique may be utilized to monitor or evaluate the process of cleaning in addition to using a technique to initialize the cleaning.

A device or mechanism may be included for debris removal, such as a filter or bucket positioned behind the robot that catches debris, e.g., allowing debris to be removed (e.g., pulled to the surface through an access point). Such a device or mechanism, e.g., a bucket or filter, may return to the robot remotely for an extended duration cleaning operation.

Furthermore, while an example autonomous mobile inspection robot has been described and illustrated in connection with FIG. 8, this is a non-limiting example. Other components or techniques may be utilized. For example, the hose 821 may be connected to a dedicated water tank or source and tethered/attached to the jetter 811 for certain applications instead of drawing water from a local source.

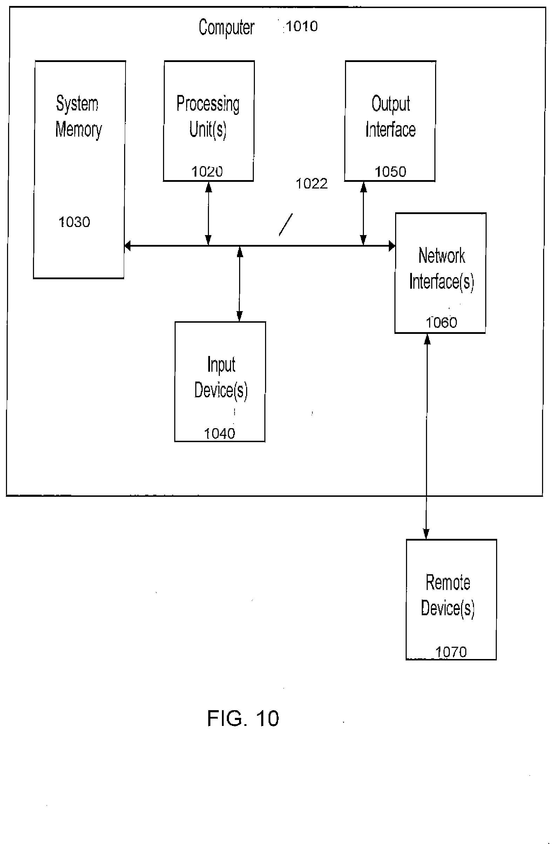

It will be readily understood that certain instantiations can be implemented using any of a wide variety of devices or combinations of devices. Referring to FIG. 10, an example device that may be used in implementing one or more instantiations includes a computing device (computer) 1010. In this regard, a computing device 1010 may be operatively coupled to autonomous mobile robot 1010 and provide hosted services (data storage, data analysis, data summary and querying, and the like). For example, computing device 1010 may provide network based access to autonomous mobile robot 10 for reporting THz data, receiving data such as autonomous mission protocols, etc. Additionally or alternatively, autonomous mobile robot 10 may incorporate a computing device such as outlined in FIG. 10, e.g., included on board in sensor component 12.

The computing device 1010 may execute program instructions configured to store an analyze pipe segment data and perform other functionality of the examples, as described herein. Components of the computing device 1010 may include, but are not limited to, a processing unit 1020, a system memory 1030, and a system bus 1022 that couples various system components including the system memory 1030 to the processing unit 1020. The computer 1010 may include or have access to a variety of computer readable media, for example for storing infrastructure data indices. The system memory 1030 may include computer readable storage media in the form of volatile and/or nonvolatile memory such as read only memory (ROM) and/or random access memory (RAM). By way of example, and not limitation, system memory 330 may also include an operating system, application programs, other program modules, and program data.

A user can interface with (for example, enter commands and information) the computing device 1010 through input devices. A monitor or other type of device can also be connected to the system bus 1022 via an interface, such as an output interface 1050. In addition to a monitor, computers may also include other peripheral output devices. The computing device 1010 may operate in a networked or distributed environment using logical connections to one or more other remote computers or databases, e.g., autonomous mobile robot 10. The logical connections may include a network, such local area network (LAN) or a wide area network (WAN), but may also include other networks/buses.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, etc., or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Examples are described herein with reference to the figures, which illustrate example methods, devices and program products according to various examples. It will be understood that the actions and functionality may be implemented at least in part by program instructions. These program instructions may be provided to a processor of a device to produce a special purpose machine, such that the instructions, which execute via a processor of the device implement the functions/acts specified.

It is worth noting that while specific blocks are used in the figures, and a particular ordering of blocks has been illustrated, these are non-limiting examples. The explicit illustrated examples are used only for descriptive purposes and are not to be construed as limiting.

## Claims

1. A method of projecting pipe data into a virtual reality (VR) system, comprising:
- obtaining (701), using a mobile pipe inspection robot that traverses through an interior of one or more pipe segments in a pipe network, pipe segment data (601) comprising visual image data, as well as one or more of laser scan data, and sonar scan data, relating to the one or more pipe segments, wherein laser reflection data is sensed and used to determine distance information regarding a distance between a laser origin and a sensor component of the robot;
- receiving, at a platform (600), the pipe segment data (601) collected by the mobile pipe inspection robot at a given time and synchronized with a particular location within the respective pipe segment;
- composing, using processing applied by the platform (600), a scan image of the particular location using the laser reflection data, the scan image representing a physical shape of the interior of the pipe segment based on the distance information;
wherein the method further comprises:
- processing (702, 704), using a processor, the visual image data and the scan image for virtual panoramic display, comprising: projecting the scan image onto a physical shape of the interior of the pipe segment to form a scan VR display image; and projecting (704) the visual image data onto the physical shape of the interior of the pipe segment; and
- providing, using the processor, the scan VR display image and the visual image data to a VR system comprising a head mounted display; wherein the scan VR display image and the visual image data provide different data source VR images of the location for switching between display of the visual image data display and the scan VR display image based on user input.

2. The method of claim 1, wherein additional data selected from textual data or telemetry data is provided.

3. The method of claim 2, wherein the additional data comprise at least one of material construction of the pipe segment, pipe segment's age, maintenance history.

4. The method of any one of claims 2 to 3, wherein the processing comprises combining the additional data with one or more of the scan VR display image and visual image data.

5. The method of claim 4, wherein the combining comprises including the additional data as a text or graphic overlay.

6. The method of claim 1, wherein the image processing proceeds in real time.

7. The method of claim 1, wherein image data of a particular pipe segment are obtained through a camera having a fisheye lens.

8. The method of claim 7, wherein images captured by the fisheye lens are de-warped and thereafter projected onto a cylinder.

9. The method of claim 8, wherein the images are stitched together in order to form a complete 360 degrees view of a particular segment.

## Patentansprüche

1. Verfahren zum Einblenden von Rohrdaten in ein Virtual-Reality-System (VR), welches umfasst:
Erfassen (701) von Rohrsegmentdaten unter Verwendung eines mobilen Rohrinspektionsroboters, der das Innere eines oder mehrerer Rohrsegmente in einem Rohrleitungsnetz durchläuft, wobei die Rohrsegmentdaten visuelle Bilddaten sowie eine oder mehrere der folgenden Datenarten umfassen.
Laserscandaten und Sonarscandaten, die sich auf das eine oder die mehreren Rohrsegmente beziehen, wobei Laserreflexionsdaten erfasst und verwendet werden, um Entfernungsinformationen bezüglich eines Abstands zwischen einem Laserursprung und einer Sensorkomponente des Roboters zu bestimmen;
Empfangen der vom mobilen Rohrinspektionsroboter zu einem bestimmten Zeitpunkt erfassten und mit einem bestimmten Ort innerhalb des jeweiligen Rohrsegments synchronisierten Rohrsegmentdaten (601) an einer Plattform (600);
Erstellen eines Scanbildes des bestimmten Ortes unter Verwendung der Laserreflexionsdaten mittels einer von der Plattform (600) durchgeführten Verarbeitung, wobei das Scanbild auf der Grundlage der Entfernungsinformationen eine physikalische Form des Inneren des Rohrsegments darstellt;
wobei das Verfahren ferner umfasst:
Verarbeiten (702, 704) der visuellen Bilddaten und des Scanbildes mithilfe eines Prozessors für eine virtuelle Panoramaanzeige, umfassend: Projizieren des Scanbildes auf eine physikalische Form des Inneren des Rohrsegments, um ein Scan-VR-Anzeigebild zu erzeugen; und Projizieren (704) der visuellen Bilddaten auf die physikalische Form des Inneren des Rohrsegments; und
Bereitstellung des Scan-VR-Anzeigebildes und der visuellen Bilddaten unter Verwendung des Prozessors an ein VR-System, das ein Head-Mounted-Display umfasst;
wobei das Scan-VR-Anzeigebild und die visuellen Bilddaten unterschiedliche VR-Bilder des Standorts aus verschiedenen Datenquellen bereitstellen, um basierend auf Benutzereingaben zwischen der Anzeige der visuellen Bilddaten und dem Scan-VR-Anzeigebild umzuschalten.

2. Verfahren nach Anspruch 1, wobei zusätzliche Daten bereitgestellt werden, die aus Textdaten oder Telemetriedaten ausgewählt sind.

3. Verfahren nach Anspruch 2, wobei die zusätzlichen Daten mindestens eines der folgenden Elemente umfassen:
die Materialzusammensetzung des Rohrsegments, das Alter des Rohrsegments, die Wartungshistorie.

4. Verfahren nach einem der Ansprüche 2 bis 3,
wobei die Verarbeitung die zusätzlichen Daten mit einem oder mehreren der folgenden Elemente mit dem gescannten VR-Anzeigebild und den visuellen Bilddaten zu kombinieren umfasst.

5. Verfahren nach Anspruch 4, wobei das Kombinieren das Einfügen der zusätzlichen Daten als Text- oder Grafiküberlagerung umfasst.

6. Verfahren nach Anspruch 1, wobei die Bildverarbeitung in Echtzeit erfolgt.

7. Verfahren nach Anspruch 1, wobei Bilddaten eines bestimmten Rohrsegments mittels einer Kamera mit einem Fischaugenobjektiv erfasst werden.

8. Verfahren nach Anspruch 7, wobei die vom Fischaugenobjektiv aufgenommenen Bilder entzerrt und anschließend auf einen Zylinder projiziert werden.

9. Verfahren nach Anspruch 8, wobei die Bilder zusammengefügt werden, um eine vollständige 360-Grad-Ansicht eines bestimmten Segments zu bilden.

## Revendications

1. Procédé de projection de données de conduite dans un système de réalité virtuelle (VR), comprenant :
- l'obtention (701), à l'aide d'un robot mobile d'inspection de conduite qui traverse un intérieur d'un ou plusieurs segments de conduite dans un réseau de conduites, de données de segments de conduite (601) comprenant des données d'image visuelle, ainsi que l'une ou plusieurs parmi des données de balayage laser et des données de balayage sonar, se rapportant aux un ou plusieurs segments de conduite,
dans lequel des données de réflexion laser sont détectées et utilisées pour déterminer des informations de distance concernant une distance entre une origine laser et un composant de capteur du robot ;
- la réception, au niveau d'une plateforme (600), les données de segments de conduite (601) collectées par le robot mobile d'inspection de conduite à un moment donné et synchronisées avec un emplacement particulier à l'intérieur du segment de conduite respectif ;
- la composition, à l'aide d'un traitement appliqué par la plateforme (600), d'une image de balayage de l'emplacement particulier en utilisant les données de réflexion laser, l'image de balayage représentant une forme physique de l'intérieur du segment de conduite sur la base des informations de distance ;
dans lequel le procédé comprend en outre :
- le traitement (702, 704), à l'aide d'un processeur, des données d'image visuelle et de l'image de balayage pour un affichage panoramique virtuel, comprenant : la projection de l'image de balayage sur une forme physique de l'intérieur du segment de conduite pour former une image affichée en réalité virtuelle (VR) ; et la projection (704) des données d'image visuelle sur la forme physique de l'intérieur du segment de conduite ; et
- la fourniture, à l'aide du processeur, l'image affichée en réalité virtuelle (VR) par balayage et de données d'images visuelles à un système de réalité virtuelle (VR) comprenant un visiocasque ;
dans lequel l'image affichée en réalité virtuelle (VR) par balayage et les données d'image visuelle fournissent des images VR provenant de sources différentes pour ce lieu, afin de basculer entre l'affichage des données d'image visuelle et l'image affichée en réalité virtuelle (VR) par balayage en fonction des actions de l'utilisateur.

2. Procédé selon la revendication 1, dans lequel des données supplémentaires choisies parmi des données textuelles ou des données de télémesure sont fournies.

3. Procédé selon la revendication 2, dans lequel les données supplémentaires comprennent au moins l'un parmi un matériau de construction du segment de conduite, l'âge du segment de conduite, un historique de maintenance.

4. Procédé selon l'une quelconque des revendications 2 à 3, dans lequel le traitement comprend combiner les données supplémentaires avec une ou plusieurs de l'image affichée en réalité virtuelle (VR) par balayage et de données d'images visuelles.

5. Procédé selon la revendication 4, dans lequel la combinaison comprend l'inclusion des données supplémentaires sous la forme d'une superposition de texte ou graphique.

6. Procédé selon la revendication 1, dans lequel le traitement d'image s'effectue en temps réel.

7. Procédé selon la revendication 1, dans lequel des données d'image d'un segment de conduite particulier sont obtenues par l'intermédiaire d'une caméra ayant un objectif fisheye.

8. Procédé selon la revendication 7, dans lequel les images capturées par l'objectif fisheye sont redressées et ensuite projetées sur un cylindre.

9. Procédé selon la revendication 8, dans lequel les images sont raccordées entre elles afin de former une vue complète à 360 degrés d'un segment particulier.
